# EUROPÄISCHE PATENTSCHRIFT

(11) **EP 1 075 402 B1**
(45) Veröffentlichungstag und Bekanntmachung des Hinweises auf die Patenterteilung: **15.09.2004**
(21) Anmeldenummer: 99957888.3
(22) Anmeldetag: 12.10.1999
(51) Int. Cl.: B60S 1/34, F16C 33/08

(54) **WISCHERLAGER**
WIPER BEARING
PALIER D'ESSUIE-GLACE

(30) Priorität: 27.02.1999 DE 19908639
(43) Veröffentlichungstag der Anmeldung: 14.02.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1999/003276
(87) Internationale Veröffentlichungsnummer: WO 2000/051856

(56) Entgegenhaltungen:
- DE-A- 2 349 952
- DE-A- 4 210 935
- DE-A- 19 546 906
- DE-A- 19 642 184

## Beschreibung

### Stand der Technik

Die Erfindung geht aus von einem Wischerlager nach dem Oberbegriff des Anspruchs 1. Ein derartiges Wischerlager ist beispielsweise aus DE-A-19546906 bekannt.

Wischeranlagen mit mehreren Scheibenwischern für Kraftfahrzeuge werden mit deren Wischerlager direkt oder indirekt über eine Platine an einer Karosserie des Kraftfahrzeugs befestigt. Die Platine trägt einen Wischerantrieb mit einem Wischermotor, dessen Motorwelle über ein Gestänge Kurbeln antreibt, die mit einem Ende einer Antriebswelle für jeden Scheibenwischer fest verbunden sind. Ferner ist möglich, daß nur die Antriebswelle eines Scheibenwischers vom Wischermotor angetrieben wird, während ein anderer Scheibenwischer über ein Viergelenkhebelgetriebe mit dem ersten Scheibenwischer verbunden ist und eine Lagerachse besitzt. Die Antriebswelle bzw. die Lagerachse ist in einem Wischerlager gelagert. Im Folgenden treffen die Ausführungen zu einer Antriebswelle für eine Lagerachse sinngemäß zu, die nicht mehr ausdrücklich genannt wird.

Im Lagergehäuse ist mindestens ein radiales Lager und an den Stirnseiten zwischen dem Lagergehäuse und einem mit der Antriebswelle fest verbundenen Teil ein axiales Lager vorgesehen. Die Antriebswelle ragt aus der Karosserie und bewegt einen an ihrem freien Ende befestigten Wischarm mit einem Wischblatt über eine Windschutzscheibe. Der Wischarm besitzt ein mit der Antriebswelle verbundenes Befestigungsteil, daß gelenkig mit einem Gelenkteil verbunden ist, an das sich starr eine Wischstange anschließt. In ein bügelförmiges Ende der Wischstange ist das Wischblatt eingehängt.

Die Wischerlager besitzen in der Regel ein Lagergehäuse aus Zink oder Kunststoff. In einem Zinklagergehäuse werden in Passungen bzw. in Buchsensitze Lagerbuchsen eingepreßt, die die Antriebswelle radial führen. In einem Kunststofflagergehäuse kann die Antriebswelle direkt in einer Passung oder in einer in einem Buchsensitz eingepreßten Lagerbuchse radial gelagert sein. Bei Zink und Kunststoff können die Passungen bzw. die Buchsensitze in einem Druckgußverfahren bzw. Spritzgußverfahren hergestellt werden. Die Buchsensitze müssen nicht oder nur geringfügig nachgearbeitet werden.

Um Gewicht gegenüber einem Zinklagergehäuse einzusparen, eine höhere Steifigkeit gegenüber einem Kunststofflagergehäuse und eine höhere Formbeständigkeit zu erreichen, bzw. um ein Werkstoffließen zu vermeiden, ist bekannt, Lagergehäuse aus Aluminium oder aus einer Aluminiumlegierung herzustellen. In einem Aluminiumlagergehäuse werden wie bei einem Zinklagergehäuse Lagerbuchsen in Passungen bzw. Buchsensitze eingepreßt. Aluminium hat die Eigenschaft, auf ein Gußwerkzeug beim Aushärten aufzuschrumpfen, wodurch insbesondere bei längeren Passungen bzw. Buchsensitzen diese nachgearbeitet werden müssen. Ferner entsteht ein erhöhter Verschleiß des Gußwerkzeugs.

### Vorteile der Erfindung

Nach der Erfindung besitzt ein Buchsensitz eines Lagergehäuses mindestens zwei sich in Montagerichtung verjüngende, konische Mantelflächen, die vorzugsweise durch mindestens eine sich radial nach innen erstreckende Stufe voneinander getrennt sind. Mit einer, vorzugsweise mit mehreren Stufen, kann trotz steilen kurzen Mantelflächen eine große Durchmesseränderung in Montagerichtung der Lagerbuchse erreicht werden. Durch die große Durchmesseränderung entsteht ein kurzer Fügeweg der Lagerbuchse bei der Montage und ein kurzer Entformungsweg des Lagergehäuses aus einem Gußwerkzeug. Wird das Lagergehäuse aus dem Gußwerkzeug entformt, sind zu Beginn bereits nach einem kurzen axialen Entformungsweg Flächen des Gußwerkzeugs von den Mantelflächen des Buchsensitzes weit entfernt. Die Entformung wird erleichtert und insbesondere der Verschleiß der Gußwerkzeuge und die erforderliche Nacharbeit des Buchsensitzes werden reduziert bzw. weitgehend vermieden.

Bei der Montage trifft zuerst ein kleiner Außendurchmesser der Lagerbuchse auf einen großen Innendurchmesser des Buchsensitzes und erst kurz bevor die Lagerbuchse vollständig in den Buchsensitz eingeführt ist kommen Mantelflächen der Lagerbuchse über einen kurzen Fügeweg auf den Mantelflächen des Buchsensitzes zum Liegen. Die Montage wird erleichtert und eine Fehlmontage, daß die Lagerbuchse mit der falschen Stirnseite zuerst eingeschoben wird, wird vermieden. Die Mantelflächen des Buchsensitzes können trotz einer großen Durchmesseränderung steil mit einer für die Entformung erforderlichen Gußschräge ausgeführt werden, mit ca. 1°-2°.

Die Antriebswelle wird durch Kurbeln angetrieben und bewegt einen Wischarm mit einem Wischblatt über eine Windschutzscheibe. Dabei entstehen periodisch auf die Antriebswelle wirkende Querkräfte. Die Querkräfte werden über die Lagerbuchse, das Lagergehäuse und die Platine an der Fahrzeugkarosserie abgestützt. Durch die konischen Flächen zwischen der Lagerbuchse und dem Lagergehäuse entsteht eine Kraftkomponente entgegen der Montagerichtung. Bei steilen Mantelflächen ist diese Kraftkomponente jedoch besonders klein und die Lagerbuchse bleibt sicher spielfrei im Lagergehäuse befestigt. Ferner wird mit steilen Mantelflächen bei einer kleinen Montagekraft eine sichere Selbsthemmung erreicht und es entsteht bereits bei einem kleinen radial nach innen gerichteten Druck auf die Lagerbuchse eine sichere, feste Verbindung. Die Lagerbuchse behält ihre Form und insbesondere ihren Innendurchmesser weitgehend bei, so daß eine Antriebswelle leicht in die Lagerbuchse eingeführt und von dieser exakt spielfrei geführt werden kann, ohne daß ein großer Kalibrieraufwand betrieben werden muß.

Das erfindungsgemäße Lagergehäuse eines Wischerlagers mit dem gestuften Buchsensitz kann aus Zink, aus Kunststoff oder einem sonstigen dem Fachmann als geeignet erscheinenden Werkstoff gegossen werden. Besonders vorteilhaft wird die erfindungsgemäße Lösung jedoch bei schwierig zu entformenden Materialien eingesetzt, wie insbesondere bei Lagergehäusen aus Aluminium oder aus einer Aluminiumlegierung. Aluminiumlagergehäuse sind besonders leicht und steif und können aus einem Gußwerkzeug aufgrund der erfindungsgemäßen kurzen Mantelflächen und großen Durchmesseränderung des Buchsensitzes leicht mit geringem Verschleiß entformt werden. Ferner wird eine Nacharbeit des Buchsensitzes weitgehend ggf. vollständig vermieden.

In einer Ausgestaltung der Erfindung besitzt die Lagerbuchse einen Bund. Die Antriebswelle kann auf dem Bund der Lagerbuchse auf einer vorteilhaften und großen axialen Lagerfläche gelagert werden. Ferner kann der Bund als radiale Lauffläche für eine Lippendichtung genutzt werden.

Durch Fertigungstoleranzen des Lagergehäuses können die Länge des Lagergehäuses und die axialen Positionen der Stufen variieren. Um einen exakten Abstand zwischen zwei axialen Lagerflächen bzw. eine exakte Länge des Lagergehäuses mit einer oder zwei Lagerbuchsen zu erreichen, werden die Lagerbuchsen auf Maß eingepreßt und bilden mit ihren Stirnseiten axiale Lagerflächen, insbesondere Lagerbuchsen mit einem Bund. Damit die Lagerbuchse in Montagerichtung sicher fixiert ist, liegt diese vorteilhaft an einem Anschlag an.

Erfindungsgemäß ist mindestens eine, vorzugsweise alle Stufen entgegen der Montagerichtung versetzt angeordnet, so daß beim Einpressen der Lagerbuchse auf Maß, die Lagerbuchse an den Stufen plastisch verformt wird. Die Länge des Lagergehäuses mit der Lagerbuchse kann auf ein exaktes Maß gebracht werden und die Lagerbuchse liegt an einem Anschlag an. Ferner wird sicher gestellt, daß die Lagerbuchse spielfrei im Lagergehäuse mit einem sicheren Halt befestigt ist. Material der Lagerbuchse legt sich im Bereich der Stufe durch die plastische Verformung über den Umfang spielfrei an dem Buchsensitz an.

Die plastische Verformung kann dazu führen, daß Material der Lagerbuchse nach innen aufgeworfen wird. In einer Ausgestaltung wird vorgeschlagen, daß bei der Montage der Lagerbuchse ein zylindrischer Stift in der Lagerbuchse angeordnet ist. Die Lagerbuchse kann dadurch in einem Schritt axial und durch den zylindrischen Stift radial kalibriert werden. Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer Wischanlage mit einem Wischarm,
- Fig. 2: einen Wischarm mit einem Wischblatt von oben,
- Fig. 3: einen vergrößerten Ausschnitt eines Schnitts entlang der Linie III-III in Fig. 2,
- Fig. 4: ein Lagergehäuse,
- Fig. 5 u.6: einen vergrößerten Ausschnitt V in Fig. 4 bei einer Montage einer Lagerbuchse,
- Fig. 7: eine Variante zu einem Ausschnitt VII in Fig. 3,
- Fig. 8: eine Variante nach Fig. 3, mit einer Lagerbuchse mit einem Bund,
- Fig. 9: einen vergrößerten Ausschnitt IX in Fig. 8,
- Fig. 10: ein Lagergehäuse mit einer Lagerbuchse bei der Montage,
- Fig. 11: ein Lagergehäuse mit einer auf Anschlag eingepreßten Lagerbuchse,
- Fig. 12: ein Lagergehäuse mit einer axial kalibrierten Lagerbuchse,
- Fig. 13: einen vergrößerten Ausschnitt XIII in Fig. 12,
- Fig. 14: eine Vorrichtung nach Fig. 13 mit einer axial und radial kalibrierten Lagerbuchse und
- Fig. 15: eine Variante nach Fig. 10 mit einem zylindrischen Montagestift.

### Beschreibung der Ausführungsbeispiele

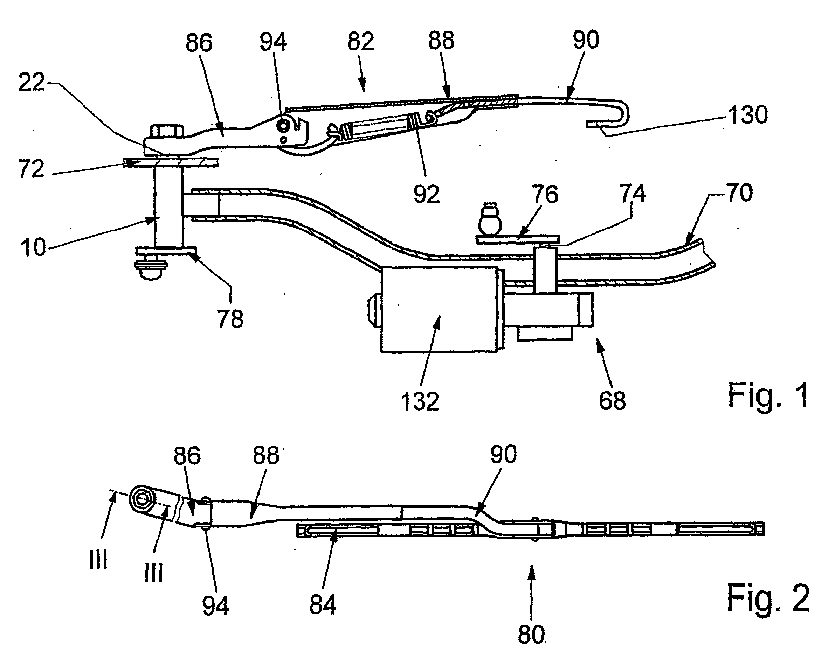

Fig. 1 zeigt einen Ausschnitt einer Wischeranlage 68 für ein Kraftfahrzeug, deren Wischerlager mit einem Lagergehäuse 10 über eine Platine 70 an einer Karosserie 72 des Kraftfahrzeugs befestigt sind. Die Platine 70 trägt einen Wischerantrieb mit einem Wischermotor 132, dessen Motorwelle 74 über eine Kurbel 76 und ein nicht näher dargestelltes Gestänge Kurbeln 78 antreibt, die jeweils mit einem Ende einer Antriebswelle 22 für einen Scheibenwischer 80 fest verbunden sind. Die Antriebswelle 22 ist im Lagergehäuse 10 radial und axial gelagert, ragt aus der Karosserie 72 und bewegt einen an ihrem freien Ende befestigten Wischarm 82 mit einem Wischblatt 84 über eine Windschutzscheibe (Fig. 2). Der Wischarm 82 besitzt ein mit der Antriebswelle 22 verbundenes Befestigungsteil 86, das gelenkig über ein Kniegelenk 94 mit einem Gelenkteil 88 verbunden ist, an das sich starr eine Wischstange 90 anschließt. In die Wischstange 90 wird an einem bügelförmigen Ende 130 das Wischblatt 84 eingehängt. Ein erforderlicher Anpreßdruck des Wischblatts 84 auf der Kraftfahrzeugscheibe wird mit einer Zugfeder 92 erreicht, die das Befestigungsteil 86 und das Gelenkteil 88 gemeinsam mit der Wischstange 90 über das Kniegelenk 94 verspannt.

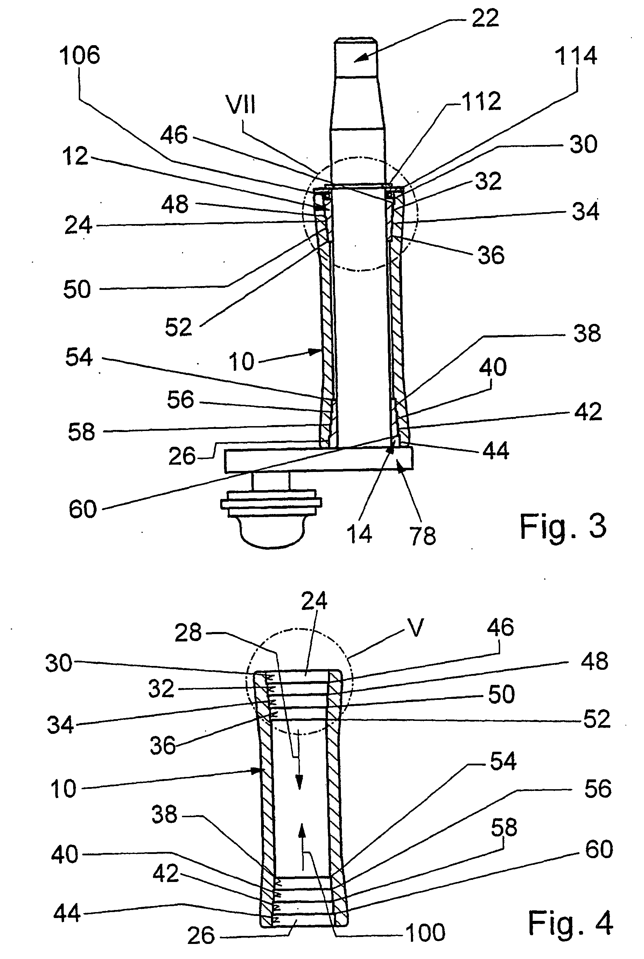

Im aus Aluminium hergestellten Lagergehäuse 10 sind zwei Lagerbuchsen 12, 14 in zwei Buchsensitze 24, 26 eingepreßt, in denen die Antriebswelle 22 geführt ist (Fig. 3). Erfindungsgemäß besitzen die Buchsensitze 24, 26 mindestens zwei, im Ausführungsbeispiel vier sich in Montagerichtung 28 bzw. 100 verjüngende, konische Mantelflächen 30, 32, 34, 36, 38, 40, 42, 44, die durch drei radial nach innen gerichtete Stufen 46, 48, 50, 56, 58, 60 voneinander getrennt und von einer Stufe 52, 54 nach innen begrenzt sind (Fig. 3, 4, 5 und 6).

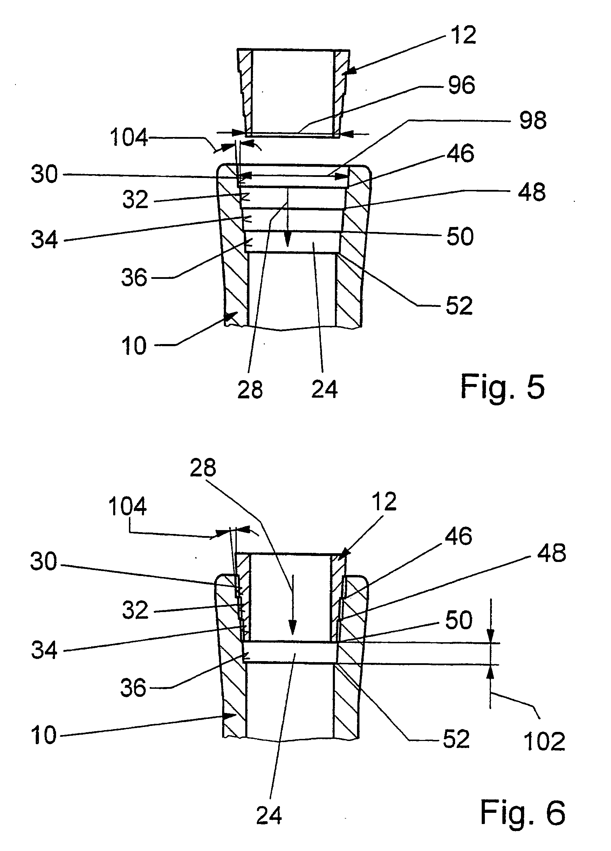

Mit den Stufen 46, 48, 50, 56, 58, 60 wird mit mehreren kurzen steilen Mantelflächen 30, 32, 34, 36, 38, 40, 42, 44 eine große Durchmesseränderung in Montagerichtung 28, 100 der Lagerbuchse 12, 14 erreicht. Bei der Montage der aus einem Sinterwerkstoff hergestellten Lagerbuchse 12, die eine der Kontur des Buchsensitzes 24 entsprechende Außenkontur aufweist, trifft zuerst ein kleiner Außendurchmesser 96 der Lagerbuchse 12 auf einen großen Innendurchmesser 98 des Buchsensitzes 24 und erst kurz bevor die Lagerbuchse 12 vollständig in den Buchsensitz 24 eingeführt ist, kommen die Mantelflächen der Lagerbuchse 12 über einen kurzen Fügeweg 102 auf den Mantelflächen 30, 32, 34, 36 des Buchsensitzes 24 zum Liegen (Fig. 5 u. 6). Die Montage wird erleichtert und eine Fehlmontage, daß die Lagerbuchse 12 mit der falschen Stirnseite zuerst eingeschoben wird, wird vermieden. Die Mantelflächen 30, 32, 34, 36 des Buchsensitzes 24 können trotz einer großen Durchmesseränderung steil mit einer für die Entformung erforderlichen Gußschräge ausgeführt werden, mit einem Winkel 104 von ca. 1°. Die Ausführungen zu der in Montagerichtung 28 montierten Lagerbuchse 12 gelten für die in Montagerichtung 100 montierten Lagerbuchse 14 entsprechend.

Neben einer erleichterten Montage der Lagerbuchsen 12, 14, bewirkt die durch die Stufen 46, 48, 50, 56, 58, 60 erzielte große Druchmesseränderung, daß beim Entformen des Lagergehäuses 10 aus einer nicht näher dargestellten Gußform, bereits nach einem kurzen axialen dem Fügeweg 102 entsprechenden Entformungsweg Flächen des Gußwerkzeugs von den Mantelflächen 30, 32, 34, 36, 38, 40, 42, 44 weit entfernt sind. Die Entformung wird erleichtert und insbesondere der Verschleiß der Gußwerkzeuge und die erforderliche Nacharbeit des Buchsensitzes 24, 26 werden reduziert bzw. weitgehend vermieden. Mit den steilen Mantelflächen 30, 32, 34, 36, 38, 40, 42, 44 wird ein sicherer Halt der Lagerbuchse 12, 14 bei einem geringen radial nach innen gerichteten Druck auf die Lagerbuchse 12, 14 erreicht.

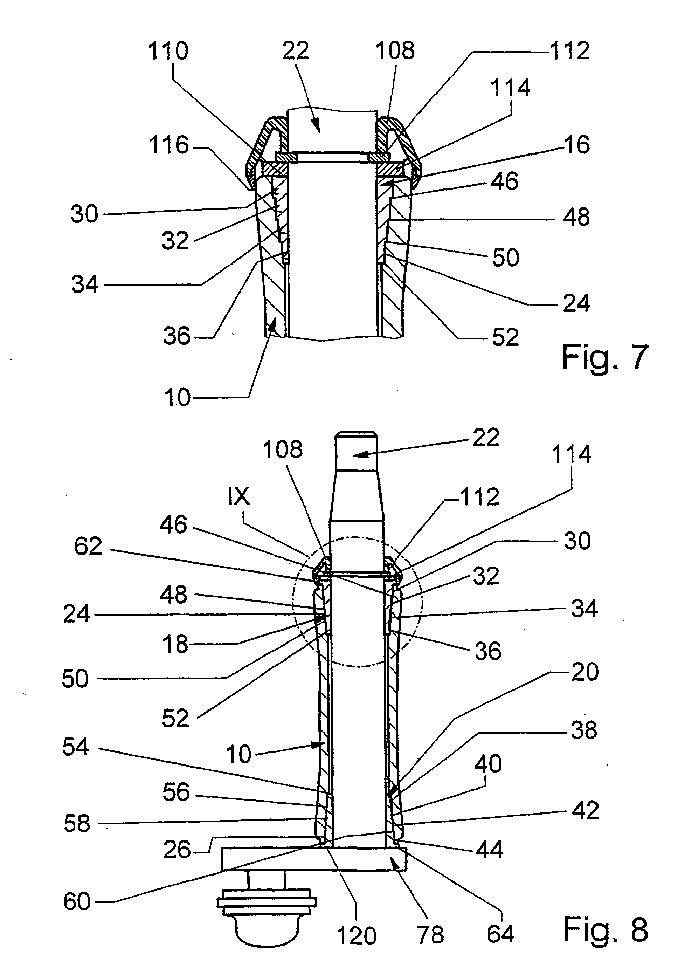

Das Lagergehäuse 10 in Fig. 3 ist in Richtung Wellende durch einen O-Ring 106 abgedichtet. Die Lagerbuchse 12 endet kurz vor einer Stirnseite des Lagergehäuses 10. Es entsteht ein Freiraum zwischen dem Lagergehäuse 10 und der Antriebswelle 22, in dem der O-Ring 106 eingesetzt ist. Anstatt mit einem O-Ring 106, kann das Lagergehäuse 10 und eine Lagerbuchse 16 mit einer Lippendichtung 108 an einer radialen Lauffläche 116 am Lagergehäuse 10 nach außen abgedichtet sein, wie in Fig. 7 dargestellt. Eine in Richtung Wellende weisende Stirnseite 110 kann vorteilhaft als axiale Lagerfläche für die Antriebswelle 22 genutzt werden, die sich über einen Spannring 112 und über einen Anlaufring 114 am Lagergehäuse 10 und an der Lagerbuchse 16 abstützt. Die im Wesentlichen gleichbleibenden Bauteile sind grundsätzlich mit den gleichen Bezugszeichen beziffert.

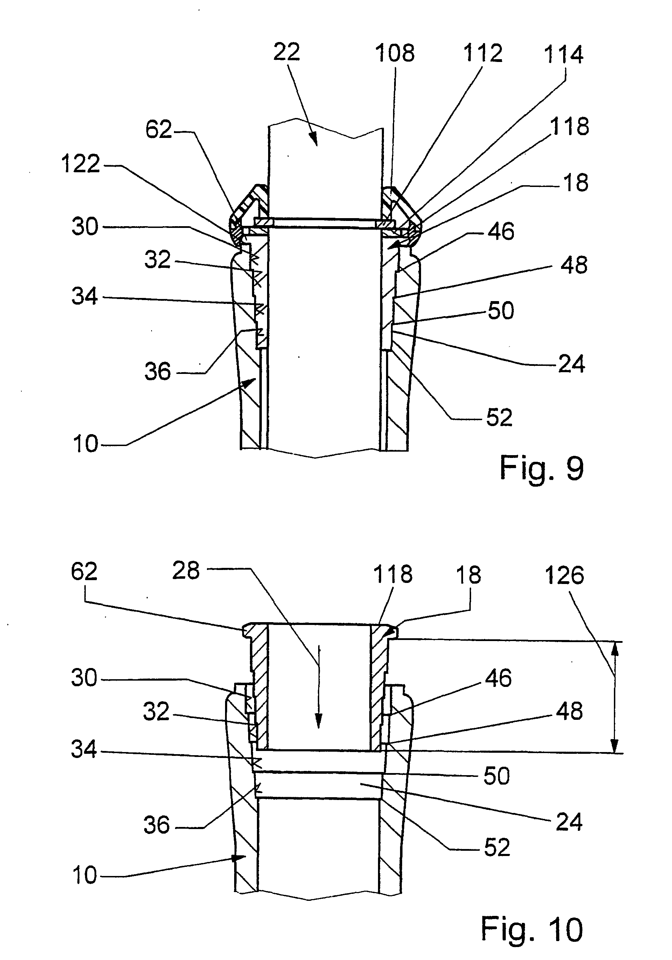

In einem Ausführungsbeispiel in Fig. 8 sind zwei Lagerbuchsen 18, 20 mit jeweils einem Bund 62, 64 ausgeführt. Die Antriebswelle 22 und die Kurbel 78 sind auf einer vorteilhaften und großen axialen Lagerfläche 118, 120 auf dem Bund 62, 64 der Lagerbuchsen 18, 20 gelagert. Ferner bildet der Bund 62 eine günstige radiale Lauffläche 122 für die Lippendichtung 108 (Fig. 9).

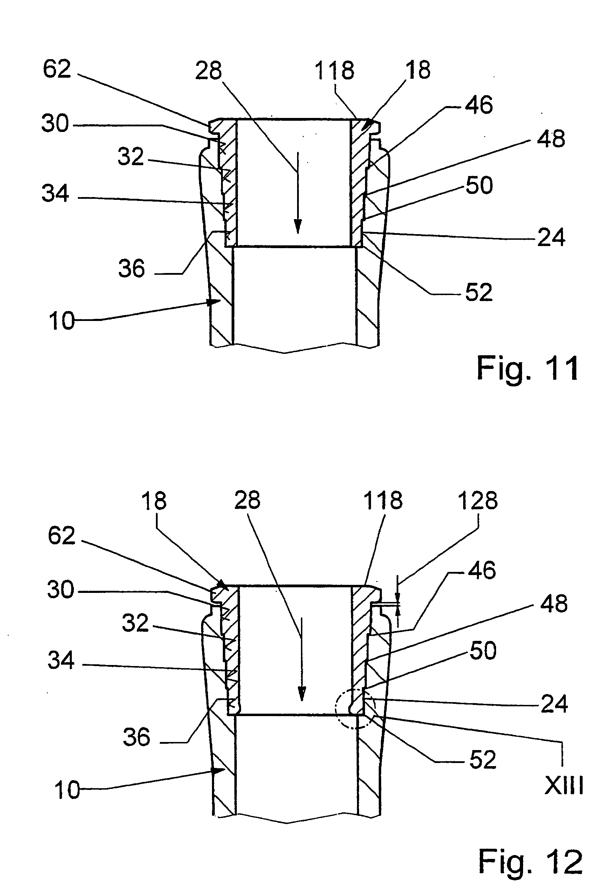

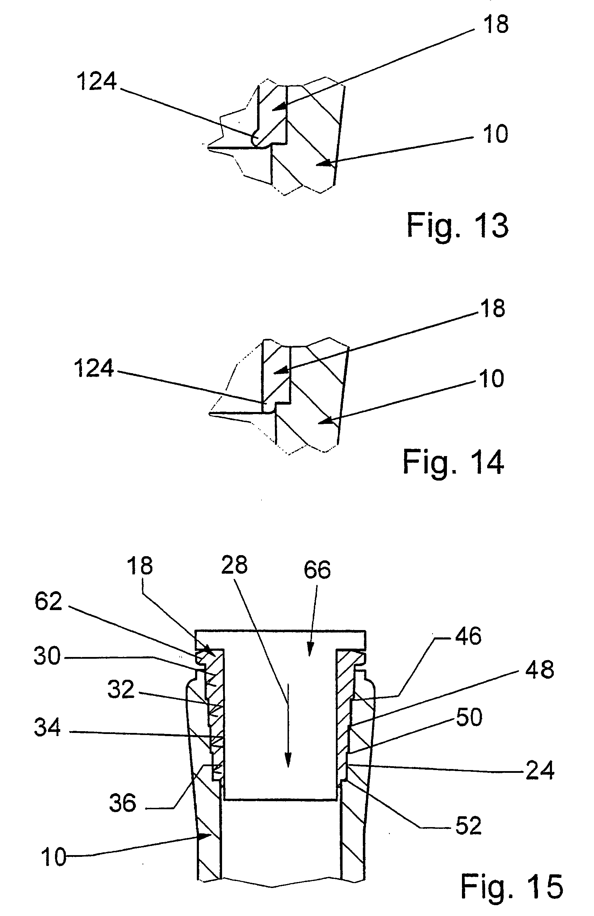

Erfindungsgemäß sind die Stufen 46, 48, 50, 52, 54, 56, 58, 60 entgegen der Montagerichtung 28 bzw. 100 der Lagerbuchse 12, 14, 16, 18, 20 versetzt angeordnet, so daß beim Einpressen der Lagerbuchse 12, 14, 16, 18, 20 auf Maß, die Lagerbuchse 12, 14, 16, 18, 20 an den Stufen 46, 48, 50, 52, 54, 56, 58, 60 plastisch verformt wird. In Fig. 10 bis 14 ist ein Montageablauf dargestellt. Die Lagerbuchse 18 wird in einem ersten Schritt auf Anschlag in den Buchsensitz 24 eingepreßt (Fig. 10 und 11) und liegt dabei an den Stufen 46, 48, 50, 52 an. In einem zweiten Schritt wird die Lagerbuchse 18 weiter in den Buchsensitz 24 eingepreßt, und zwar bis eine vorgegebene axiale Position bzw. eine vorgegebene Länge des Lagergehäuses 10 mit den Lagerbuchsen 18 und 20 erreicht ist (Fig. 12 und 13). Material der Lagerbuchse 18 wird an den Stufen 46, 48, 50, 52 plastisch verformt und legt sich dabei über den Umfang im Bereich der Stufen 46, 48, 50, 52 spielfrei mit einer weitgehend gleichmäßigen Flächenpressung an dem Buchsensitz 24 an, wenn dies nicht bereits vor der plastischen Verformung der Fall war. Die Lagerbuchse 18 ist spielfrei im Lagergehäuse 10 an der gewünschten Position mit einem sicheren Halt befestigt. Um zu vermeiden, daß der Bund 62 auf dem Lagergehäuse 10 zum Liegen kommt, bevor eine exakte Position bzw. ein exaktes Maß erreicht ist und die axiale Kalibrierung behindert, ist die Länge 126 der Lagerbuchse 18 bis zum Bund 62 (Fig. 10) unter Berücksichtigung von Toleranzen so gewählt, daß nach dem Einpressen der Lagerbuchse 18 auf ein exaktes Maß stets ein Spiel 128 zwischen dem Bund 62 und dem Lagergehäuse 10 vorhanden ist (Fig. 12).

Durch die plastische Verformung kann Material 124 der Lagerbuchse 18 nach innen aufgeworfen werden (Fig. 13). Das Material 124 kann in einem weiteren Montageschritt bei einer radialen Kalibrierung der Lagerbuchse 18 mit einem zylindrischen Stift verdrängt werden (Fig. 14). Vorteilhaft ist jedoch bereits bei der Montage ein zylindrischer Montagestift 66 in der Lagerbuchse 18 angeordnet (Fig. 15). Die Lagerbuchse 18 wird dadurch in einem Schritt axial und durch den zylindrischen Montagestift 66 radial kalibriert werden.

### Bezugszeichen

- 10: Lagergehäuse
- 12: Lagerbuchse
- 14: Lagerbuchse
- 16: Lagerbuchse
- 18: Lagerbuchse
- 20: Lagerbuchse
- 22: Antriebswelle
- 24: Buchsensitz
- 26: Buchsensitz
- 28: Montagerichtung
- 30: Mantelfläche
- 32: Mantelfläche
- 34: Mantelfläche
- 36: Mantelfläche
- 38: Mantelfläche
- 40: Mantelfläche
- 42: Mantelfläche
- 44: Mantelfläche
- 46: Stufe
- 48: Stufe
- 50: Stufe
- 52: Stufe
- 54: Stufe
- 56: Stufe
- 58: Stufe
- 60: Stufe
- 62: Bund
- 64: Bund
- 66: Stift
- 68: Wischeranlage
- 70: Platine
- 72: Karosserie
- 74: Motorwelle
- 76: Kurbel
- 78: Kurbel
- 80: Scheibenwischer
- 82: Wischarm
- 84: Wischblatt
- 86: Befestigungsteil
- 88: Gelenkteil
- 90: Wischstange
- 92: Zugfeder
- 94: Kniegelenk
- 96: Außendurchmesser
- 98: Innendurchmesser
- 100: Montagerichtung
- 102: Fügeweg
- 104: Winkel
- 106: O-Ring
- 108: Lippendichtung
- 110: Stirnseite
- 112: Spannring
- 114: Anlaufring
- 116: Lauffläche
- 118: Lagerfläche
- 120: Lagerfläche
- 122: Lauffläche
- 124: Material
- 126: Länge
- 128: Spiel
- 130: Ende
- 132: Wischermotor

## Patentansprüche

1. Wischerlager mit einem Lagergehäuse (10), in dem zumindest eine Lagerbuchse (12, 14, 16, 18, 20) für eine Antriebswelle (22) in einem Buchsensitz (24, 26) angeordnet ist, **dadurch gekennzeichnet, daß** der Buchsensitz (24, 26) mindestens zwei sich in Montagerichtung (28, 100) der Lagerbuchse (12, 14, 16, 18, 20) verjüngende, konische Mantelflächen (32, 34, 36, 38, 40, 42, 44) aufweist und die Lagerbuchse (12, 14, 16, 18, 20) eine der Kontur des Buchsensitzes (24, 26) entsprechende Außenkontur besitzt.

2. Wischerlager nach Anspruch 1, **dadurch gekennzeichnet, daß** das Lagergehäuse (10) aus Aluminium oder einer Aluminiumlegierung ist.

3. Wischerlager nach einem der Ansprüche 1 oder 2, **dadurch gekennzeichnet, daß** die Mantelflächen durch mindestens eine sich radial nach innen erstreckende Stufe (46, 48, 50, 52, 54, 56, 58, 60) voneinander getrennt sind.

4. Wischerlager nach einem der vorhergehenden Ansprüche, **dadurch gekennzeichnet, daß** die Lagerbuchse (18, 20) einen Bund (62, 64) aufweist, der eine axiale Lagerfläche (118, 120) bildet.

5. Wischerlager nach einem der vorhergehenden Ansprüche, **dadurch gekennzeichnet, daß** zumindest eine Stufe (46, 48, 50, 52, 54, 56, 58, 60) entgegen der Montagerichtung (28, 100) versetzt angeordnet ist und die Lagerbuchse (12, 14, 16, 18, 20) durch das Einpressen in den Buchsensitz (24, 26) auf Maß zumindest an der einen Stufe (46, 48, 50, 52, 54, 56, 58, 60) plastisch verformt ist.

6. Verfahren zur Montage eines Wischerlagers nach Anspruch 5, **dadurch gekennzeichnet, daß** bei der Montage der Lagerbuchse (18) ein zylindrischer Stift (66) in der Lagerbuchse (18) angeordnet ist und die Lagerbuchse (18) beim Einpressen in den Buchsensitz (24) gleichzeitig axial und durch den zylindrischen Stift (66) radial kalibriert wird.

## Claims

1. Wiper bearing having a bearing housing (10) in which at least one bearing bushing (12, 14, 16, 18, 20) for a drive shaft (22) is arranged in a bushing seat (24, 26), **characterized in that** the bushing seat (24, 26) has at least two conical circumferential surfaces (32, 34, 36, 38, 40, 42, 44) which taper in the installation direction (28, 100) of the bearing bushing (12, 14, 16, 18, 20), and the bearing bushing (12, 14, 16, 18, 20) has an outer contour corresponding to the contour of the bushing seat (24, 26).

2. Wiper bearing according to Claim 1, **characterized in that** the bearing housing (10) is of aluminium or an aluminium alloy.

3. Wiper bearing according to either of Claims 1 and 2, **characterized in that** the circumferential surfaces are separated from each other by at least one radially inwardly extending step (46, 48, 50, 52, 54, 56, 58, 60).

4. Wiper bearing according to one of the preceding claims, **characterized in that** the bearing bushing (18, 20) has a collar (62, 64) which forms an axial bearing surface (118, 120).

5. Wiper bearing according to one of the preceding claims, **characterized in that** at least one step (46, 48, 50, 52, 54, 56, 58, 60) is arranged offset counter to the installation direction (28, 100), and the bearing bushing (12, 14, 16, 18, 20) is plastically deformed to size at least on the one step (46, 48, 50, 52, 54, 56, 58, 60), by pressing it into the bushing seat (24, 26).

6. Method for installing a wiper bearing according to Claim 5, **characterized in that** during the installation of the bearing bushing (18) a cylindrical pin (66) is arranged in the bearing bushing (18), and the bearing bushing (18), when pressed into the bushing seat (24), is simultaneously calibrated axially and, by means of the cylindrical pin (66), radially.

## Revendications

1. Palier d'essuie-glace comprenant un logement de palier (10) muni d'au moins un coussinet de palier (12, 14, 16, 18, 20) pour un arbre de entraînement (22) disposé dans un siège de coussinet (24, 26),
**caractérisé en ce que**
le siège de coussinet (24, 26) présente au moins deux surfaces d'enveloppe coniques (32, 34, 36, 38, 40, 42, 44) se rétrécissant dans la direction d'assemblage (28, 100) du coussinet de palier (12, 14, 16, 18, 20) et le coussinet de palier (12, 14, 16, 18, 20) a un contour extérieur correspondant au contour du siège de coussinet (24, 26).

2. Palier d'essuie-glace selon la revendication 1,
**caractérisé en ce que**
le logement de palier (10) est composé en aluminium ou en alliage d'aluminium.

3. Palier d'essuie-glace selon l'une des revendications 1 ou 2,
**caractérisé en ce que**
les surfaces d'enveloppe sont séparées l'une de l'autre au moins par un étage (46, 48, 50, 52, 54, 56, 58, 60) s'étendant radialement vers l'intérieur.

4. Palier d'essuie-glace selon l'une des revendications précédentes,
**caractérisé en ce que**
le coussinet de palier (18, 20) présente une collerette (62, 64) qui forme une surface de palier axiale (118, 120).

5. Palier d'essuie-glace selon l'une des revendications précédentes,
**caractérisé en ce qu'**
au moins un étage (46, 48, 50, 52, 54, 56, 58, 60) est disposé à l'opposé de la direction d'assemblage (28, 100) et le coussinet de palier (12, 14, 16, 18, 20) subit une déformation plastique par impression dans le siège de coussinet (24, 26) au moins sur l'un des étages (46, 48, 50, 52, 54, 56, 58, 60).

6. Procédé d'assemblage d'un palier d'essuie-glace selon la revendication 5,
**caractérisé en ce que**
au cours de l'assemblage du coussinet de palier (18), une tige cylindrique (66) est disposée dans le coussinet de palier (18) et le coussinet de palier (18) est calibré à la fois axialement par impression dans le siège de coussinet (24) et radialement par la tige cylindrique (66).
